# EUROPÄISCHE PATENTANMELDUNG

(11) **EP 1 647 440 A2**
(43) Veröffentlichungstag der Anmeldung: **19.04.2006**
(21) Anmeldenummer: 05020854.5
(22) Anmeldetag: 24.09.2005
(51) Int. Cl.: B60N 2/48, B60N 2/20

(54) **Kopfstütze für ein Fahrzeugsitz**

(30) Priorität: 13.10.2004 DE 102004049853
(71) Anmelder: KEIPER GmbH & Co. KG, 67657 Kaiserslautern (DE)
(72) Erfinder: Düker, Christoph, 85399 Hallbergmoos (DE)
(74) Vertreter: Patentanwälte Hosenthien-Held und Dr. Held

(57) **Zusammenfassung**

Bei einer Kopfstütze (1) für einen Fahrzeugsitz, insbesondere für einen Kraftfahrzeugsitz, mit wenigstens einer Kopfstützenstange (21), welche in eine Kopfstützenhülse (11) einer Lehne (3) des Fahrzeugsitzes (5) einführbar ist, wobei die in einer Grundstellung wenigstens teilweise ausgefahrene Kopfstütze (1) beim Schwenken der Lehne (3) aufgrund einer Beaufschlagung mit einer Zugkraft in eine Arbeitsstellung einfährt und beim Zurückschwenken der Lehne (3) wieder in die Grundstellung ausfährt, ist die Kopfstütze (1) mit ihrer Kopfstützenstange (21) in der Grundstellung relativ zu wenigstens einem Schieber (15) höheneinstellbar, welcher in der Grundstellung mit der Lehne (3) vernegelt und beim Einfahren in die Arbeitsstellung relativ zur Kopfstützenhülse (11) verschieblich ist, wobei die beaufschlagende Zugkraft auf den Schieber (15) wirkt und wenigstens eine erste Feder (41) am Schieber (15) angreift.

## Beschreibung

Die Erfindung betrifft eine Kopfstütze für einen Fahrzeugsitz, insbesondere für einen Kraftfahrzeugsitz, mit den Merkmalen des Oberbegriffs des Anspruches 1.

Bei einer aus der DE 298 13 043 U1 bekannten Kopfstütze dieser Art sind die Kopfstützenstangen an einer gemeinsamen Brücke angebracht. Beim Vorschwenken der Lehne wird die Kopfstütze relativ zur Lehne eingefahren, wobei eine zwischen Brücke und Lehne angebrachte Feder eine Rückstellkraft aufbaut, die eine einfache Rückkehr in die Grundstellung erlaubt.

Der Erfindung liegt die Aufgabe zu Grunde, eine Kopfstütze der eingangs genannten Art zu verbessern, insbesondere hinsichtlich ihrer Funktionalität. Diese Aufgabe wird erfindungsgemäß durch eine Kopfstütze mit den Merkmalen des Anspruches 1 gelöst. Vorteilhafte Ausgestaltungen sind Gegenstand der Unteransprüche.

Dadurch, daß die Kopfstütze mit ihrer Kopfstützenstange in der Grundstellung relativ zu wenigstens einem Schieber in verschiedenen Positionen höheneinstellbar ist, welcher in der Grundstellung mit der Lehne verriegelt ist, wird ein relatives Bezugssystem für eine komfortable Kopfstützeneinstellung geschaffen. Die Kopfstütze kann auch als Ganzes entnommen werden, wobei der Schieber und die Kopfstützenhülsen in der Lehne verbleiben. Der Schieber ist - nach dem Entriegeln - beim Einfahren in die Arbeitsstellung relativ zur Kopfstützenhülse verschieblich, welche insbesondere an einem Querholm der Lehne angebracht ist, an dem vorzugsweise auch der Schieber verriegelt ist. Beim Einfahren wirkt die beaufschlagende Zugkraft auf den Schieber, d.h. das Relativsystem der höheneinstellbaren Positionen wird als Ganzes verschoben und die eingestellte Höhe der Kopfstütze beibehalten. Ferner greift wenigstens eine erste Feder am Schieber an, beispielsweise um die Höheneinstellung in unterschiedlichen Positionen auszugleichen und/oder eine Rückstellkraft aufzubauen.

Vorzugsweise wirkt die Zugkraft unter Zwischenschaltung der ersten Feder auf den Schieber, d.h. die erste Feder liegt in der Wirkungslinie der Zugkraft, so daß beispielsweise beim Beaufschlagen des Schiebers zunächst der Schieber verschoben werden kann, bevor die ausgleichende Wirkung der ersten Feder zum Tragen kommt. Vorzugsweise wird die erste Feder wenigstens nach dem Verschieben des Schiebers gespannt, in der Regel während des Verschiebens gering und nach Erreichen eines Anschlags oder der gleichen deutlich stärker, wofür beim Schwenken der Lehne das vom Schieber abgewandte Ende der ersten Feder vorzugsweise festgehalten wird. Eine derartige erste Feder kann auch dazu beitragen, das Gewicht der Lehne wenigstens teilweise zu kompensieren.

Nachdem die erste Feder vorzugsweise der Übertragung der Zugkraft dient, ist vorzugsweise eine zweite Feder vorgesehen ist, welche auf den Schieber wirkt und beim Verschieben des Schiebers während des Einfahrens der Kopfstütze in die Arbeitsstellung vorzugsweise gespannt wird, um eine Rückstellkraft zur Rückkehr in die Grundstellung aufzubauen.

Die beiden Federn sind vorzugsweise in Reihe geschaltet, wobei - entsprechend der bevorzugten, unterschiedlichen Aufgabenverteilung - auch unterschiedliche Federkonstanten vorgesehen sind. Zunächst wird mit dem Einfahren der Kopfstütze die zweite Feder gespannt, dann die erste Feder. Um die Anzahl der Bauteile gering zu halten, greifen die beiden Federn an wenigstens einem Verriegelungselement, beispielsweise einem Haken, an, mittels welchem der Schieber mit der Lehne verriegelt ist, wobei die beiden Federn vorzugsweise entgegengesetzte Momente auf das Verriegelungselement ausüben, d.h. in der Regel die die Zugkraft übertragende erste Feder öffnend und die die Rückstellkraft aufbauende zweite Feder schließend. In der Regel werden zwei Kopfstützenhülsen, zwei Schieber, zwei Kopfstützenstangen und zwei Verriegelungselemente vorgesehen sein, wobei zur besseren Koordination der beiden Teilsysteme und zur Reduzierung der Anzahl der Bauteile insgesamt nur eine einzige erste Feder und eine einzige zweite Feder pro Kopfstütze vorgesehen ist.

Die Kopfstütze kann bei allen Fahrzeugsitzen mit schwenkbarer Lehne eingesetzt werden, die in bauraumkritischen Fahrzeugen verwendet werden sollen, beispielsweise niedere und kurze Fahrzeuge. Der Einsatzzweck ist jedoch hierauf nicht beschränkt.

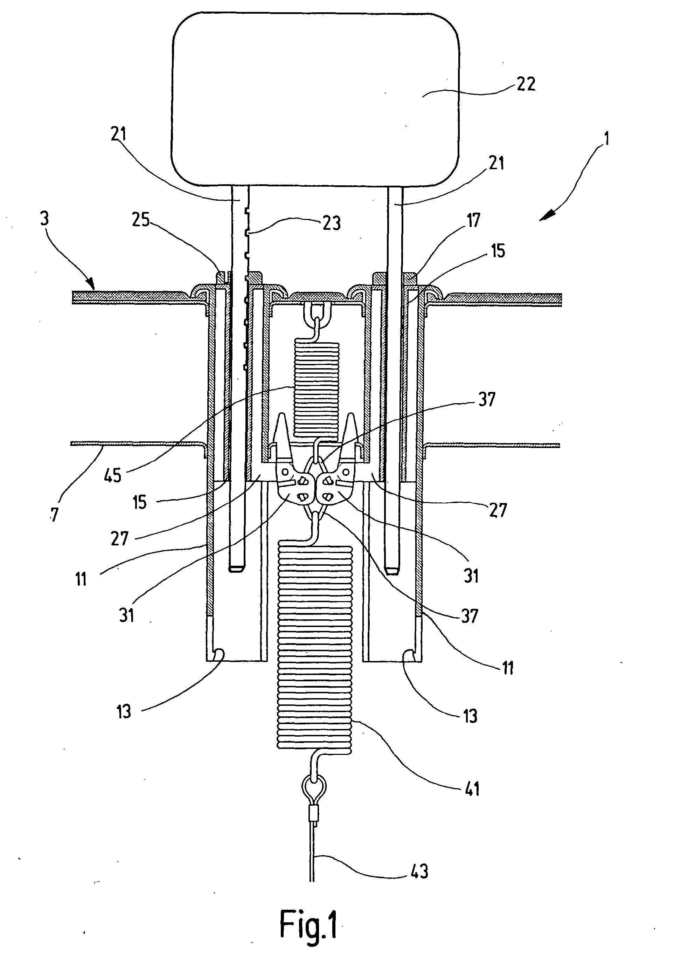

Im folgenden ist die Erfindung anhand eines in der Zeichnung dargestellten Ausführungsbeispiels näher erläutert. Es zeigen
- Fig. 1: einen Schnitt durch das Ausführungsbeispiel in der Grundstellung, wobei eine Zwischenposition der Kopfstütze eingestellt ist,

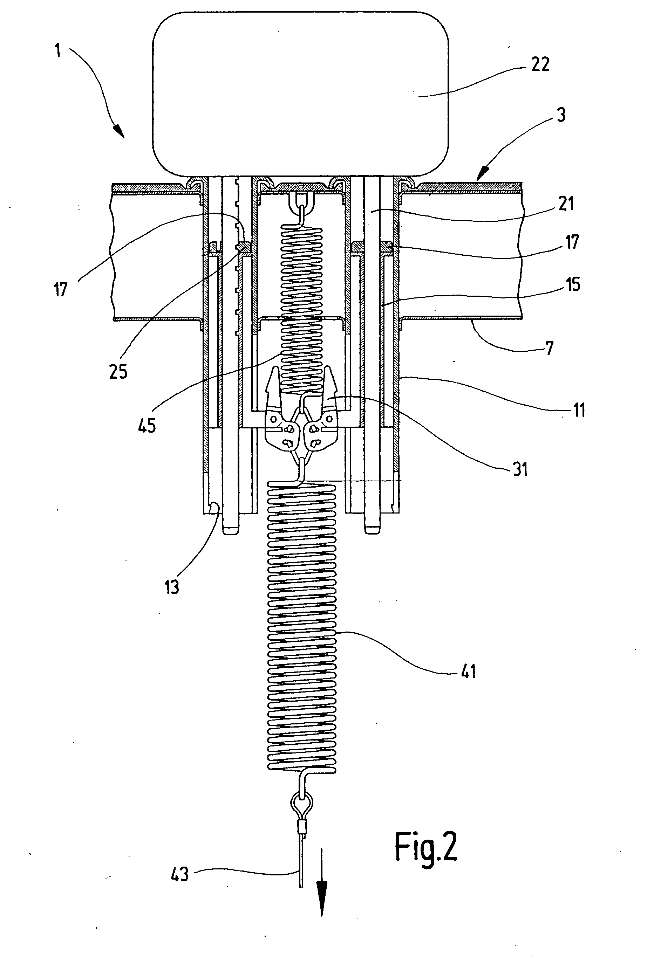

- Fig. 2: einen Schnitt entsprechend Fig. 1 in der Arbeitsstellung mit gespannter erster Feder,

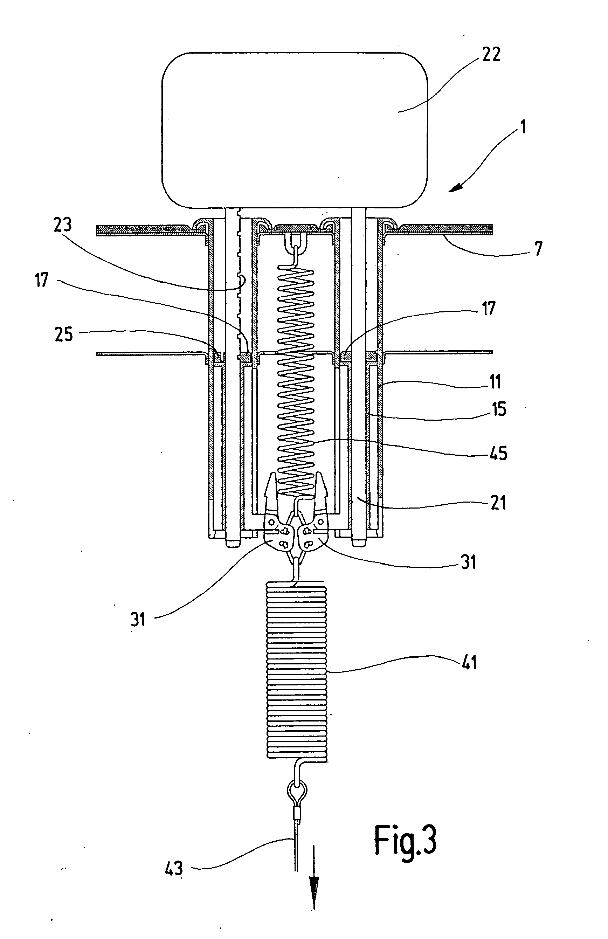

- Fig. 3: einen Schnitt durch das Ausführungsbeispiel in der Arbeitsstellung, wobei die Höchstposition der Kopfstütze eingestellt ist, und

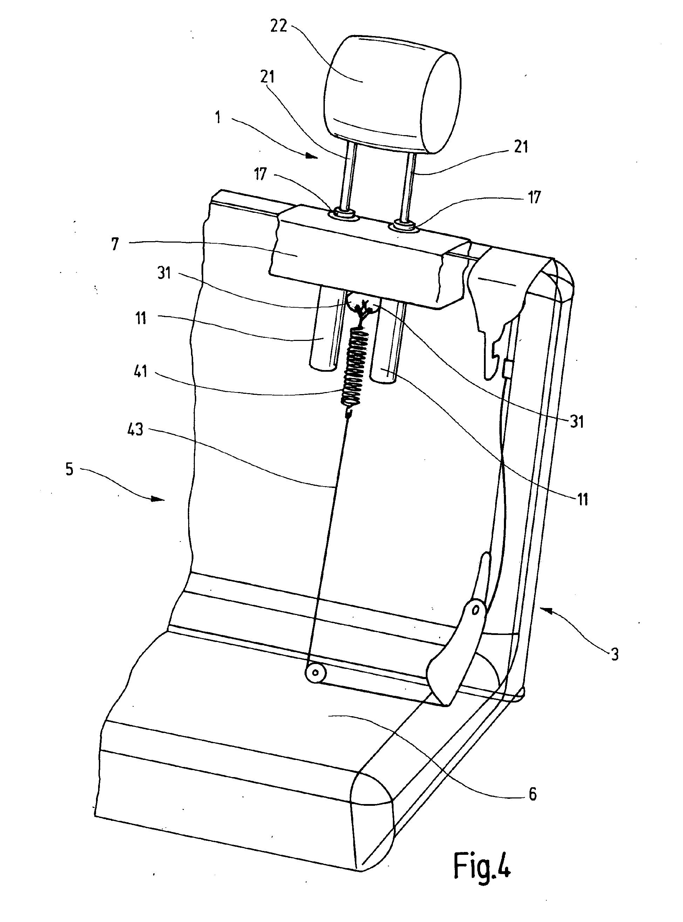

- Fig. 4: eine vereinfachte Darstellung eines Fahrzeugsitzes.

Eine Kopfstütze 1 ist für eine Lehne 3 eines Fahrzeugsitzes 5 in einem Kraftfahrzeug vorgesehen. Die zum Einsitzen geeignete Stellung der Lehne 3 definiert die nachfolgend verwendeten Richtungsangaben. Die relativ zu einem Sitzteil 6 des Fahrzeugsitzes 5 schwenkbare Lehne 3 weist als Strukturteil entlang ihrer Oberkante einen Querholm 7 auf, welcher als Hohlkastenprofil ausgebildet ist. In der oberen Wand und in der unteren Wand des Querholms 7 sind jeweils zwei Kragenzüge ausgebildet, die paarweise miteinander fluchten. Zwei parallele, im wesentlichen zylindrische Kopfstützenhülsen 11 sind in ihrer Längsrichtung durch den Querholm 7 durch je ein Paar von Kragenzügen gesteckt, wobei zur Sicherung bezüglich der Längsrichtung Rippen oder dergleichen an den Kopfstützenhülsen 11 vorgesehen sein können. Am oberen Ende weist jede Kopfstützenhülse 11 einen radial nach außen abstehenden Flansch auf, welcher als Blende dient und über das Polster der Lehne 3 greift. Am unteren Ende jeder Kopfstützenhülse 11 ist wenigstens ein, vorzugsweise fünf radial nach innen vorspringende, nasenartige Anschläge 13 vorgesehen.

In jede Kopfstützenhülse 11 ist ein Schieber 15 eingeschoben, welcher in Längsrichtung der Kopfstützenhülse 11 beweglich geführt ist. Jeder Schieber 15 weist eine zylindrische, innere Hülse auf, welche mit mehreren radial abstehenden Längsrippen versehen ist, die an der Innenwand der Kopfstützenhülse 11 anliegen. Am oberen Ende des Schiebers 15 ist ein Flansch angeformt, auf welchem eine ringförmige Blende 17 sitzt. Jeder Schieber 15 dient mit seiner inneren Hülse zur Aufnahme je einer Kopfstützenstange 21, welche dadurch mittelbar in die zugehörige Kopfstützenhülse 11 eingeführt ist. Die beiden zueinander parallelen Kopfstützenstangen 21 tragen den gepolsterten Kopfstützenkörper 22. Wenigstens eine der Kopfstützenstangen 21 weist mehrere Rasten 23 auf, welche mit einer lösbaren Rastmechanik 25 zusammenwirken, die in wenigstens einer der beiden Blenden 17 angeordnet ist.

Am unteren Ende jedes Schiebers 15 steht (von einer Längsrippe) ein auf den jeweils anderen Schieber 15 ausgerichteter Arm 27 radial ab, welcher durch einen Längsschlitz in der zugehörigen Kopfstützenhülse 11 ragt. Am Arm 27 ist mittels eines Bolzens ein als Haken ausgebildetes Verriegelungselement 31 angelenkt, welches mit seinem hakenförmigen Ende durch eine Öffnung des Querholms 7 ragt und den Rand dieser Öffnung hintergreift, womit der Schieber 15 verriegelt ist. Am anderen, vom hakenförmigen Ende abgewandten Ende weist das Verriegelungselement 31 zwei Einhängeöffnungen auf. In die einander entsprechenden Einhängeöffnungen der beiden zueinander spiegelbildlichen Verriegelungselemente 31 ist jeweils ein gemeinsamer Einhängedraht 37 eingehängt.

In den unteren der beiden Einhängedrähte 37 ist das eine Ende einer unteren oder ersten Feder 41 eingehängt, deren anderes Ende an einer Endschlaufe eines Seiles 43 eingehängt ist. Das Seil 43 ist an seinem anderen Ende am Sitzteil 6 des Fahrzeugsitzes 1 oder an der Fahrzeugstruktur angebracht. In den oberen der beiden Einhängedrähte 37 ist das eine Ende einer oberen oder zweiten Feder 45 eingehängt, deren anderes Ende an der oberen Wand des Querholms 7 angebracht ist. Beide Federn 41 und 45 sind als Schraubenfedern ausgebildet und werden auf Zug beansprucht. Dabei übt die erste Feder 41 ein öffnendes Moment auf die Verriegelungselemente 31 und die zweite Feder 45 ein schließendes Moment auf die Verriegelungselemente 31 aus. Von der Auslegung her ist die erste Feder 41 stärker als die zweite Feder 45 und die Haltekraft der Rastmechanik 25 stärker als erste Feder 41.

In der Grundstellung der Kopfstütze 1 sind die oberen Enden der Kopfstützenhülsen 11 und der Schieber 15 wenigstens näherungsweise auf gleicher Höhe bezüglich der Lehne, die Verriegelungselemente 31 sind an der Quertraverse 7 eingehakt, die erste Feder 41 ist ohne Vorspannung und die zweite Feder 45 ist allenfalls geringfügig vorgespannt, um die Verriegelungselemente 31 verriegelt zu halten. Die Kopfstütze 1 ist nun relativ zur Lehne 3 höheneinstellbar. Dabei ist der Kopfstützenkörper 22 zusammen mit den beiden Kopfstützenstange 21 nach Öffnen der Rastmechanik 25 relativ zu den Schiebern 15 (und den Kopfstützenhülsen 11) verschiebbar und an bestimmten, durch die Rasten 23 vorgegebenen Stellen wieder durch die Rastmechanik 25 festlegbar oder vollständig entnehmbar. Die höchste einstellbare Position der Kopfstütze 1 ist im folgenden als Höchstposition, die tiefste einstellbare Position als Tiefstposition und alle weiteren als Zwischenpositionen bezeichnet.

Zusätzlich kann bei einem Vorschwenken der Lehne 3 die erfindungsgemäße Kopfstütze 1 in eine Arbeitsstellung eingefahren werden, was je nach Auslegung ein Anschlagen an den Fahrzeughimmel verhindert oder den Mindestabstand zur vorderen Sitzreihe oder zur Windschutzscheibe verringert. Dabei geht die eingestellte Position der Grundstellung der Kopfstütze 1 erfindungsgemäß nicht verloren. Für diese Memoryfunktion bleibt die Relativstellung zwischen Schieber 15 und Kopfstützenstange 21 erhalten, und die Relativstellung zwischen Schieber 15 und Kopfstützenhülse 11 wird für den Übergang von der Grundstellung in die Arbeitsstellung ausgenutzt.

Wird die Lehne 3 entriegelt und etwas nach vorne geschwenkt, so wird die erste Feder 41 mittels des festgehaltenen Seiles 43 mit einer Zugkraft beaufschlagt. Die erste Feder 41 wird allerdings aufgrund ihrer großen Federkonstante zunächst kaum gelängt, sondern entriegelt die Verriegelungselemente 31 entgegen der Kraft der zweiten Feder 45. Sofern die Kopfstütze 1 sich nicht in der Tiefstposition befindet, zieht - beim weiteren Schwenken der Lehne 3 - die erste Feder 41 die Schieber 15 nach unten. Die Blenden 17 einschließlich Rastmechanik 25 und die Kopfstützenstange 21 fahren zusammen mit den Schiebern 15 in die Kopfstützenhülsen 11 ein. Die zweite Feder 45 wird dabei gelängt und baut eine Rückstellkraft auf.

Wenn der Kopfstützenkörper 22 in Anlage an das obere Ende der Kopfstützenhülsen 11 gelangt oder wenn die Kopfstütze 1 sich bereits in ihrer Tiefstposition befindet, beginnt sich die erste Feder 41 merklich zu längen, d.h. eine Rückstellkraft aufzubauen, wobei sie zum einen das Einfahren der Kopfstütze 1 abfedert und zum anderen als Lehnenkompensationsfeder wirkt, d.h. das Gewicht der Lehne 3 während desjenigen Teils der Schwenkbewegung teilweise kompensiert, der eine Komponente in Richtung der Schwerkraft aufweist. Die Abmessungen können auch so gewählt sein, daß der Kopfstützenkörper 22 nur aus den Zwischenpositionen und der Tiefstposition heraus in Anlage an das obere Ende der Kopfstützenhülsen 11 gelangt, jedoch beim Einfahren aus der Höchstposition der Kopfstütze 1 heraus die Schieber 15 in Anlage an die Anschläge 13 gelangen. Bei einem Lehnenschwenkwinkel von beispielsweise 80°, d.h. beispielsweise 57° gegenüber dem Lot nach vorne, kann die Kopfstütze 1 unabhängig von ihrer Position in der Grundstellung vollständig eingefahren sein.

Beim Zurückschwenken der Lehne 3 nach hinten gelangt die Kopfstütze 1 wieder in ihre Grundstellung, d.h. zunächst wird die erste Feder 41 spannungsfrei und dann zieht die zweite Feder 45 die Schieber 15 wieder in ihre Ausgangsposition. Die Kopfstütze 1 nimmt dann wieder ihre zuvor eingestellte Position der Höhe ein.

### Bezugszeichenliste

- 1: Kopfstütze
- 3: Lehne
- 5: Fahrzeugsitz
- 6: Sitzteil
- 7: Querholm
- 11: Kopfstützenhülse
- 13: Anschlag
- 15: Schieber
- 17: Blende
- 21: Kopfstützenstange
- 22: Kopfstützenkörper
- 23: Raste
- 25: Rastmechanik
- 27: Arm
- 31: Verriegelungselement
- 37: Einhängedraht
- 41: erste Feder
- 43: Seil
- 45: zweite Feder

## Patentansprüche

1. Kopfstütze für einen Fahrzeugsitz, insbesondere für einen Kraftfahrzeugsitz, mit wenigstens einer Kopfstützenstange (21), welche in eine Kopfstützenhülse (11) einer Lehne (3) des Fahrzeugsitzes (5) einführbar ist, wobei die in einer Grundstellung wenigstens teilweise ausgefahrene Kopfstütze (1) beim Schwenken der Lehne (3) aufgrund einer Beaufschlagung mit einer Zugkraft in eine Arbeitsstellung einfährt und beim Zurückschwenken der Lehne (3) wieder in die Grundstellung ausfährt, **dadurch gekennzeichnet, daß** die Kopfstütze (1) mit ihrer Kopfstützenstange (21) in der Grundstellung relativ zu wenigstens einem Schieber (15) höheneinstellbar ist, welcher in der Grundstellung mit der Lehne (3) verriegelt und beim Einfahren in die Arbeitsstellung relativ zur Kopfstützenhülse (11) verschieblich ist, wobei die beaufschlagende Zugkraft auf den Schieber (15) wirkt und wenigstens eine erste Feder (41) am Schieber (15) angreift.

2. Kopfstütze nach Anspruch 1, **dadurch gekennzeichnet, daß** die Kopfstützenhülsen (11) an einem Querholm (7) der Lehne (3) angebracht sind.

3. Kopfstütze nach Anspruch 1 oder 2, **dadurch gekennzeichnet, daß** die Zugkraft unter Zwischenschaltung der ersten Feder (41) auf den Schieber (15) wirkt.

4. Kopfstütze nach Anspruch 3, **dadurch gekennzeichnet, daß** beim Schwenken der Lehne (3) das vom Schieber (15) abgewandte Ende der ersten Feder (41) festgehalten wird, die erste Feder (41) wenigstens nach dem Verschieben des Schiebers (15) gespannt wird, und insbesondere das Gewicht der Lehne (3) wenigstens teilweise kompensiert wird.

5. Kopfstütze nach einem der Ansprüche 1 bis 4, **dadurch gekennzeichnet, daß** eine zweite Feder (45) vorgesehen ist, welche auf den Schieber (15) wirkt.

6. Kopfstütze nach Anspruch 5, **dadurch gekennzeichnet, daß** beim Verschieben des Schiebers (15) während des Einfahrens der Kopfstütze (1) in die Arbeitsstellung die zweite Feder (45) gespannt wird.

7. Kopfstütze nach Anspruch 5 oder 6, **dadurch gekennzeichnet, daß** die beiden Feder (41, 45) in Reihe geschaltet sind.

8. Kopfstütze nach einem der Ansprüche 5 bis 7, **dadurch gekennzeichnet, daß** die beiden Federn (41, 45) an wenigstens einem Verriegelungselement (31) angreifen, mittels welchem der Schieber (15) mit der Lehne (3) verriegelt ist.

9. Kopfstütze nach Anspruch 8, **dadurch gekennzeichnet, daß** die beiden Federn (41, 45) entgegengesetzte Momente auf das Verriegelungselement (31) ausüben.

10. Fahrzeugsitz mit einem Sitzteil (6), einer relativ zum Sitzteil (6) schwenkbaren Lehne (3) und einer Kopfstütze (1) nach einem der Ansprüche 1 bis 9.
